(19) Europäisches Patentamt
European Patent Office
Office européen des brevets

(11) Veröffentlichungsnummer: **0 263 073 B1**

# (12) EUROPÄISCHE PATENTSCHRIFT

(45) Veröffentlichungstag der Patentschrift: **29.09.93**

(51) Int. Cl.$^5$: **C09B 44/08**

(21) Anmeldenummer: **87810562.6**

(22) Anmeldetag: **28.09.87**

## (54) Kationische Disazofarbstoffe.

(30) Priorität: **03.10.86 CH 3960/86**

(43) Veröffentlichungstag der Anmeldung:
**06.04.88 Patentblatt 88/14**

(45) Bekanntmachung des Hinweises auf die Patenterteilung:
**29.09.93 Patentblatt 93/39**

(84) Benannte Vertragsstaaten:
**CH DE FR GB IT LI**

(56) Entgegenhaltungen:
**US-A- 2 945 849**
**US-A- 4 062 836**

(73) Patentinhaber: **CIBA-GEIGY AG**
**Klybeckstrasse 141**
**CH-4002 Basel(CH)**

(72) Erfinder: **Stingelin, Willy**
**Stockackerstrasse 1A**
**CH-4153 Reinach(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 263 073 B1

## Beschreibung

Die Erfindung betrifft neue kationische von Sulfonsäuregruppen freie Disazofarbstoffe, Verfahren zu deren Herstellung sowie deren Verwendung als Farbstoffe, insbesondere zum Färben von Textilmaterialien und insbesondere Papier.

Die neuen Disazofarbstoffe entsprechen der Formel

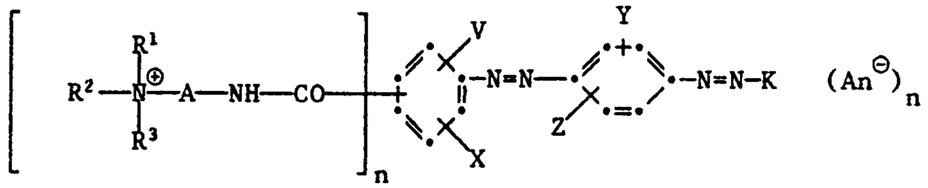 (I)

worin

| | |
|---|---|
| $R^1$, $R^2$ und $R^3$ | unabhängig voneinander je einen gegebenenfalls substituierten Alkylrest oder $R^1$ und $R^2$ zusammen mit dem sie verbindenden Stickstoffatom oder $R^1$, $R^2$ und $R^3$ zusammen mit dem sie verbindenden Stickstoffatom einen heterocyclischen Rest, |
| A | einen Alkylenrest mit 2 bis 6 C-Atomen, |
| V und X | unabhängig voneinander Wasserstoff, gegebenenfalls durch Hydroxy, Halogen, Cyan oder $C_1$-$C_4$-Alkoxy substituiertes $C_1$-$C_4$-Alkyl oder $C_1$-$C_4$-Alkoxy, |
| Y | Wasserstoff, $C_1$-$C_4$-Alkyl oder -Alkoxy, Halogen, Cyan, |
| Z | Wasserstoff, $C_1$-$C_4$-Alkyl oder -Alkoxy, Halogen, Cyan, eine Gruppe der Formel<br>-NH-CHO,<br>-NH-CO-$NH_2$,<br>-NH-CO-NH-Q oder<br>$-NH-CO-(O)_m-Q$,<br>worin m Null oder 1 und Q gegebenenfalls substituiertes $C_1$-$C_4$-Alkyl oder Phenyl bedeutet, |
| K | eine Kupplungskomponente der Formel |

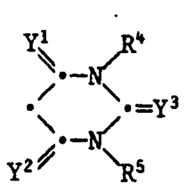 (II)

worin

| | |
|---|---|
| $Y^1$ und $Y^2$ | unabhängig voneinander =O, =NH oder =N-$C_1$-$C_4$-Alkyl, |
| $Y^3$ | =O, =S, =NR oder =N-CN, wobei R Wasserstoff oder $C_1$-$C_4$-Alkyl ist, |
| $R^4$ und $R^5$ | unabhängig voneinander je Wasserstoff, gegebenenfalls substituiertes Alkyl oder gegebenenfalls substituiertes Phenyl bedeuten, |
| n | 1 oder 2 und |
| $An^{\ominus}$ | ein Anion darstellt. |

In der obigen Formel II ist für die Kupplungskomponente nur eine tautomere Form angegeben, auch die anderen tautomeren Formen sollen jedoch durch diese Formel mit umfasst sein.

$R^1$, $R^2$ und $R^3$ stellen unabhängig voneinander je einen gegebenenfalls substituierten Alkylrest dar, beispielsweise Methyl, Ethyl, n- oder iso-Propyl, n-, sec- oder tert-Butyl, geradkettiges oder verzweigtes Pentyl oder Hexyl, Cyclopentyl oder Cyclohexyl, wobei diese Reste substituiert sein können, z.B. durch Hydroxy, Phenyl oder Alkoxy. Beispiele für solche substituierten Reste sind Hydroxymethyl, Hydroxyethyl, Methoxyethyl, Ethoxyethyl, Propoxypropyl oder Benzyl.

$R^1$ und $R^2$ können auch zusammen mit dem sie verbindenden Stickstoffatom einen heterocyclischen Rest darstellen, beispielsweise einen Pyrrolidin-, Piperidin-, Morpholin- oder Piperazinrest, oder $R^1$, $R^2$ und

$R^3$ bilden zusammen mit dem sie verbindenden Stickstoffatom einen heterocyclischen Rest, z.B. einen Pyridinium- oder monoquaternierten Triethylendiaminrest.

Vorzugsweise bedeutet $R_1$ Methyl oder Hydroxyethyl und $R^2$ und $R^3$ unabhängig voneinander je $C_1$-$C_3$-Alkyl, insbesondere je Methyl.

A bedeutet einen Alkylenrest mit 2 bis 6 C-Atomen, vorzugsweise einen unverzweigten Rest, z.B. Ethylen, Propylen, Butylen, Pentylen oder Hexylen. Vorzugsweise bedeutet A Ethylen oder Butylen und insbesondere Propylen.

V und X bedeuten unabhängig voneinander je Wasserstoff, $C_1$-$C_4$-Alkyl oder -Alkoxy, wobei diese letztgenannten Gruppen durch Hydroxy, Halogen, wie Brom oder vor allem Chlor, Cyan oder $C_1$-$C_4$-Alkoxy substituiert sein können. Vorzugsweise ist V Wasserstoff und X Wasserstoff, Methyl oder Methoxy.

Y bedeutet Wasserstoff, $C_1$-$C_4$-Alkyl oder -Alkoxy, Halogen, wie Brom oder Chlor, oder Cyan. Vorzugsweise bedeutet Y Wasserstoff, Methyl, Methoxy oder Chlor.

Z bedeutet Wasserstoff, $C_1$-$C_4$-Alkyl oder -Alkoxy, Halogen, wie Brom oder Chlor, Cyan oder eine Gruppe der Formel
-NH-CHO,
$-NH-CO-NH_2$,
-NH-CO-NHQ oder

$$-NH-CO-(O)_m-Q,$$

worin m Null oder 1 und Q gegebenenfalls substituiertes $C_1$-$C_4$-Alkyl oder Phenyl bedeutet. Als Substituenten für die Alkylgruppen Q kommen z.B. Halogen, wie Chlor oder Brom, oder vor allem Gruppen der Formeln

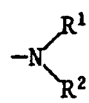

oder

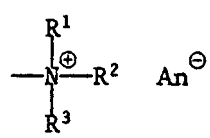

in Betracht, wobei $R^1$, $R^2$ und $R^3$ die weiter vorne angeführten Bedeutungen aufweisen und $An^{\ominus}$ ein Anion ist. Als Substituenten für die Phenylgruppe Q kommen z.B. in Frage: $C_1$-$C_4$-Alkyl oder -Alkoxy, Halogen oder Nitro.

Vorzugsweise bedeutet Z Methyl, Ethyl, Methoxy, Ethoxy, Acetylamino, Propionylamino, Methoxycarbonylamino, Ethoxycarbonylamino oder eine Gruppe der Formel -NH-CHO, $-NH-CO-NH_2$,

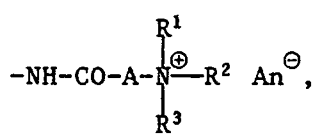

$-NH-CO-R^2$ oder

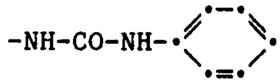 ,

worin A Ethylen, Propylen, oder Butylen, $R^1$ Methyl oder Hydroxyethyl und $R^2$ und $R^3$ unabhängig voneinander je $C_1$-$C_3$-Alkyl bedeuten.

Bei der Definition der Kupplungskomponente K der oben aufgeführten Formel (II) bedeuten $R^4$ und $R^5$ unabhängig voneinander je Wasserstoff, gegebenenfalls substituiertes Alkyl oder gegebenenfalls substituiertes Phenyl.

Stellen $R^4$ und/oder $R^5$ eine gegebenenfalls substituierte Alkylgruppe dar, so ist darunter z.B. ein Methyl-, Ethyl-, n- oder iso-Propyl-, n-, sec.- oder tert.-Butyl-, ein geradkettiger oder verzweigter Pentyl- oder Hexyl- oder ein Cyclohexylrest zu verstehen, der einfach oder mehrfach z.B. durch -OH, $C_1$-$C_4$-Alkoxy oder $C_1$-$C_4$-Hydroxyalkoxy substituiert sein kann.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl und 2-Hydroxyethoxypentyl.

Bedeuten $R^4$ und/oder $R^5$ gegebenenfalls substituiertes Phenyl, so kann es sich um unsubstituiertes oder einfach oder mehrfach mit gleichen oder verschiedenen Resten substituiertes Phenyl handeln.

Als derartige Rest kommen z.B. in Frage: $C_1$-$C_4$-Alkyl, worunter Methyl, Ethyl, n- oder iso-Propyl oder n-, sec.- oder tert.-Butyl zu verstehen ist, $C_1$-$C_4$-Alkoxy, welches in dieser Anmeldung generell, Methoxy, Ethoxy, n- oder iso-Propoxy oder n-, sec.- oder tert.-Butoxy umfasst, Halogen wie Fluor, Chlor oder Brom oder Nitro.

Vorzugsweise handelt es sich bei $R^4$ und/oder $R^5$ als Phenyl um unsubstituiertes oder mit 1 bis 3 $C_1$-$C_4$-Alkyl, Chlor oder Methoxygruppen substituiertes Phenyl, wobei insbesondere die Bedeutung unsubstituiertes Phenyl bevorzugt ist.

$R^4$ und $R^5$ stehen bevorzugt für Wasserstoff oder $C_1$-$C_4$-Alkyl und besonders bevorzugt für Wasserstoff oder Methyl.

$Y^1$ und/oder $Y^2$ stehen vorzugsweise für die funktionelle Gruppe =O oder =NH, wobei es ausserdem bevorzugt ist, dass $Y^1$ und $Y^2$ gleich sind. $Y^1$ und $Y^2$ sind besonders bevorzugt gleich und bedeuten jeweils =O.

$Y^3$ stellt bevorzugt die Gruppe =O, =S, =NH oder =N-CN und insbesondere bevorzugt die Gruppe =O dar.

In einer besonders bevorzugten Ausführungsform der erfindungsgemässen Azofarbstoffe stehen $Y^1$, $Y^2$ und $Y^3$ jeweils für =O.

Als Anionen $An^{\ominus}$ kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonate-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Eine bevorzugte Ausführungsform der Erfindung betrifft Azofarbstoffe der Formel (I), worin

| | |
|---|---|
| $R^1$ | Methyl oder hydroxyethyl, |
| $R^2$ und $R^3$ | unabhängig voneinanderje $C_1$-$C_3$-Alkyl, |
| A | Ethylen, Propylen oder Butylen, |
| V | Wasserstoff, |
| X | Wasserstoff, Methyl oder Methoxy, |
| Y | Wasserstoff, Methyl, Methoxy oder Chlor, |
| Z | Methyl, Methoxy, Ethyl, Ethoxy, Acetylamino, Propionylamino, Methoxycarbonylamino, Ethoxycarbonylamino oder eine Gruppe der Formel |

-NH-CHO,

$-NH-CO-NH_2$,

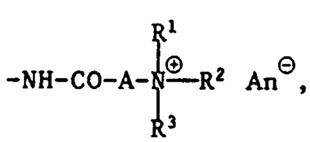

$-NH-CO-R^2$ oder

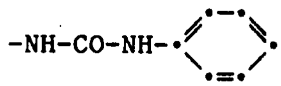 ,

K eine Kupplungskomponente der Formel

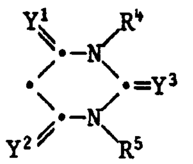 (II)

worin

| | |
|---|---|
| $Y^1$ und $Y^2$ | unabhängig voneinander je =O oder =NH, |
| $Y^3$ | =O, =S, =NH oder =N-CN, |
| $R^4$ und $R^5$ | unabhängig voneinander Wasserstoff oder $C_1$-$C_4$-Alkyl bedeuten, |
| n | 1 oder 2 und |
| $An^{\ominus}$ | ein Anion bedeutet. |

Unter diesen sind diejenigen besonders bevorzugt, bei denen $R^1$, $R^2$ und $R^3$ je Methyl, A Propylen, V und X je Wasserstoff, $Y^3$ = O, $R^4$ und $R^5$ je Wasserstoff oder Methyl bedeuten und die übrigen Symbole die vorstehend aufgeführten Bedeutungen aufweisen.

Die Herstellung der Disazofarbstoffe der Formel (I) erfolgt in an sich bekannter Art und Weise, beispielsweise indem man ein Amin der Formel

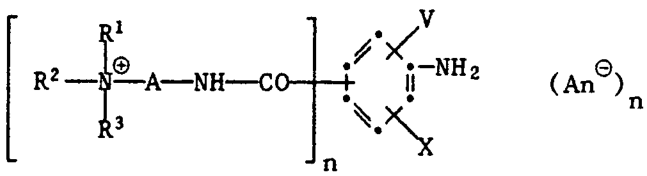 (III)

diazotiert, mit einer Kupplungskomponente der Formel

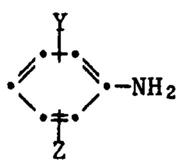 (IV)

umsetzt, die erhaltene Aminoazoverbindung erneut diazotiert und mit einer Kupplungskomponente der Formel

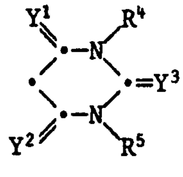 (II)

umsetz, wobei für $R^1$, $R^2$, $R^3$, A, V, X, Y, Z, $Y^1$, $Y^2$, $Y^3$, $R^4$, $R^5$, n und $An^{\ominus}$ die zuvor angegebenen Bedeutungen und Bevorzugungen gelten.

Die Verbindungen der Formeln II, III und IV sind bekannt oder können auf bekannte Art und Weise erhalten werden.

Die Azoverbindungen der Formel (I) werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln

eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise, Essigsäure, Ameisensäure, Milchsäure, Zitronensäure, Amide wie Formamid, Dimethylformamid, Harnstoff, Alkohole wie Glykol, Diglykol, Diglykoläther, vorzugsweise Methyl- oder Aethyläther.

Verwendung finden die Azoverbindungen der Formel (I) vor allem als Farbstoffe zum Färben und Bedrucken von Textilmaterialien, Papier, Leder und zur Bereitung von Tinten. Als Textilmaterialien kommen natürliche und synthetische kationisch anfärbbare Materialien in Frage. Bevorzugt werden die neuen Azoverbindungen zum Färben und Bedrucken von Papier, Halbkartons und Kartons in der Masser und in der Oberfläche, sowie von Textilmaterialien, die z.B. vorteilhaft aus Homo- oder Mischpolymerisaten des Acrylnitrils bestehen oder aus synthetischen Polyamiden oder Polyestern, welche durch saure Gruppen modifiziert sind, eingesetzt. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegenden, beispielsweise als Faser, Faden, Gewebe, Gewirke, Stückware und Fertigware, wie Hemden oder Pullover.

Mit den erfindungsgemässen Farbstoffen lassen sich egale Färbungen bzw. Drucke herstellen, die sich durch sehr gute Allgemeinechtheiten vor allem einen sehr hohen Ausziehgrad und gute Wasserechtheiten auszeichnen.

Des Weiteren können die neuen Azoverbindungen der Formel (I) auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Azoverbindungen der Formel (I) haben auf diesen Textilmaterialien ein gutes Ziehvermögen, einen guten Ausziehgrad und die erhaltenen Färbungen weisen sehr gute Echtheiten, vor allem Nassechtheiten auf.

Eine bevorzugte Verwendung der neuen Azoverbindungen der Formel (I) liegt in der Anwendung zum Färben von Papier aller Arten, vor allem von gebleichtem ungeleimtem und geleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit und/oder Sulfat-Zellstoff verwendet werden kann. Ganz besonders geeignet sind diese Verbindungen zum Färben von ungeleimtem Papier (z.B. Servietten, Tischdecken, hygienischen Papieren) als Folge ihrer sehr hohen Affinität zu diesem Substrat.

Die neuen Azoverbindungen der Formel (I) ziehen auf diese Substrate sehr gut auf, wobei die Abwässer praktisch farblos bleiben.

Man erhält Färbungen in gelben, gelb-orangen oder roten Nuancen.

Die erhaltenen Färbungen zeichnen sich durch gute Allgemeinechtheiten aus, wie eine gute Lichtechtheit bei gleichzeitig hoher Klarheit und Farbstärke und Nassechtheit, d.h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsstes Mineralwasser; wegen ihrer guten Alkoholechtheit sind sie auch gegen alkoholische Getränkte beständig. Diese Eigenschaft ist z.B. besonders für Servietten und Tischdecken erwünscht, bei denen vorhersehbar ist, dass das gefärbte Papier in nassem Zustand (z.B. getränkt mit Wasser, Alkohol, Tensid-Lösung etc..) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

In der US-A-2,945,849 sind Disazofarbstoffe beschrieben, die an der Kupplungskomponente einen kationischen Rest aufweisen. Es sind jedoch keine Disazofarbstoffe beschrieben, die Barbitursäure oder ähnliche Verbindungen als Kupplungskomponente enthalten.

Die US-A-4,062,836 beschreibt disperse Disazofarbstoffe ohne kationische Substituenten.

Die folgenden Beispiele veranschaulichen die Erfindung, ohne sie darauf zu limitieren. Teile (T) sind - sofern nichts anderes angegeben - Gewichtsteile und die Temperaturen sind in Grad Celsius angegeben.

Die Abkürzung RKN stellt eine Qualitätsbezeichnung dar und gibt den Reinheitsgrad der Cellulose an; die Abkürzung SR (Schopper-Riegler) gibt den Mahlgrad an.

Beispiel 1:

A) Zu einer Lösung von 84 Teilen p-Nitrobenzoylchlorid in 260 Teilen Toluol werden 95,1 Teile Dimethylaminopropylamin innerhalb von 15 Minuten zugetropft. Die Temperatur steigt dabei exotherm auf 95°. Nach dem Absinken der Temperatur auf 30° werden 200 Teile Wasser zugegeben, auf 10°C

gekühlt, das ausgefallene Produkt abgesaugt, mit Wasser salzfrei gewaschen und unter Vakuum bei 60° getrocknet. Das Produkt wird dann zur Quaternierung in 960 Teilen Toluol verrührt und danach werden 47,8 Teile Dimethylsulfat zugetropft. Die Temperatur steigt dabei auf 50° (exotherm). Anschliessend wird auf 75° erwärmt und diese Temperatur 8 Stunden beibehalten. Nach Abkühlen auf Raumtemperatur wird das weisse quaternierte Produkt abgesaugt, mit Toluol gewaschen und bei 60° unter Vakuum getrocknet. Zur Hydrierung wird es in Anwesenheit von Palladiumkohle in 320 Teilen Methanol suspendiert und mit Wasserstoff hydriert. Nach Beendigung der Reduktion wird der Katalysator abgesaugt und das Methanol unter Vakuum abdestilliert. Der harzige Rückstand entpricht der Formel

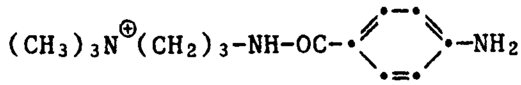 $CH_3SO_4^{\ominus}$

B) 7,7 Teile der gemäss A) hergestellten Verbindung werden in 35 Teilen Wasser gelöst, mit 30 Teilen Eis und 7 Teilen 32 %iger Salzsäure versetzt und mit 20,8 Teilen 1n Natriumnitrilösung bei 0 - 5° diazotiert. Dann werden 2,4-Teile 2,5-Dimethylanilin in 42 Teilen 3,5 %iger Salzsäure gelöst und in die Diazolösung getropft. Durch Einstreuen von krist. Na-acetat wird das Kupplungsgemisch auf einen pH-Wert von 3,5 - 4 gestellt. Sobald keine Diazolösung mehr nachweisbar ist, wird die Suspension mit Kochsalz versetzt, bis eine Tüpfelprobe praktisch farblosen Auslauf zeigt. Danach wird der Niederschlag filtriert und mit Salzlösung gewaschen. Der vorliegende Monoazofarbstoff wird in 200 Teilen Wasser suspendiert, dann werden 7 Teile 32 %ige Salzsäure zugesetzt und bei 0 - 5° mit 19,2 Teilen 1n Natriumnitritlösung diazotiert. Bei 0 - 10° wird die Diazolösung zu einer Lösung von 2,4 Teilen Barbitursäure in 100 Teilen Wasser und 15 Teilen 30 %iger Natronlauge getropft, wobei ein pH-Wert von 6 - 7 durch Zugabe von Natronlauge gehalten wird. Man rührt 4 Stunden, setzt dann 160 Teile Ethanol zu, rührt weitere 2 Stunden, saugt den ausgefallenen Farbstoff ab, wäscht mit Ethanol, dann mit Aceton und trocknet im Vakuum bei 60°. Der Farbstoff, entsprechend der Formel

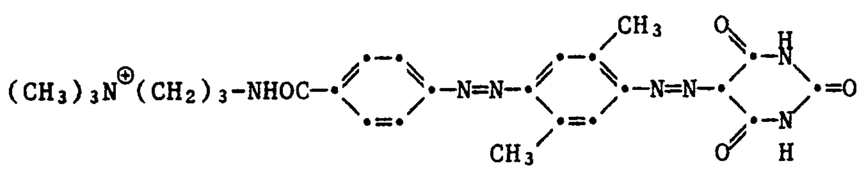 $An^{\ominus}$

$An^{\ominus}$: Mischung aus $Cl^{\ominus}$ und $CH_3OSO_3^{\ominus}$

wird in Form eines Pulvers erhalten, das in verdünnter Ameisensäure löslich ist und Papier in gelborangen Tönen färbt. Die Papierfärbungen zeigen gute Licht- und Nassechtheiten.

Beispiel 2: Arbeitet man wie im Beispiel 1 A) beschrieben, verwendet jedoch anstelle von p-Nitrobenzoylchlorid die gleiche Menge m-Nitrobenzoylchlorid, so erhält man die Verbindung der Formel

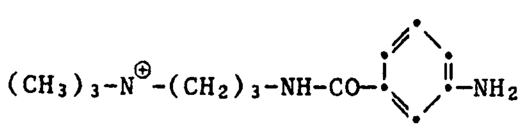 $CH_3SO_4^{\ominus}$

Von dieser Verbindung setzt man 7 Teile ein und arbeitet wie im Beispiel 1 B) beschrieben. Man erhält den Farbstoff der Formel

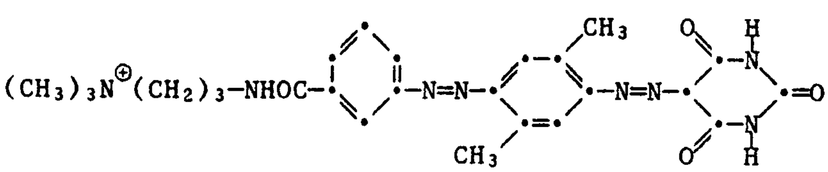 $Cl^{\ominus}/CH_3OSO_3^{\ominus}$

der in Form eines Pulvers anfällt, das in verdünnter Ameisensäure löslich ist und Papier in gelborangen Tönen färbt. Die Papierfärbungen zeigen gute Licht und Nassechtheiten.

Beispiel 3:

A) Zu einer Lösung von 47 Teilen p-Nitrobenzoylchlorid in 174 Teilen Toluol tropft man innerhalb von 15 Minuten 65,7 Teile Diethylaminopropylamin. Die Temperatur steigt dabei exotherm auf 90°. Nach dem Absinken der Temperatur auf 35° werden 100 Teile Wasser zugesetzt und verrührt. Man wartet, bis sich die Phasen getrennt haben, wäscht die organische Phase mit Wasser, trocknet und dampft ein. Der Rückstand wird in 87 Teilen Toluol gelöst und anschliessend wie im Beispiel 1A) beschrieben durch Zutropfen von 42 Teilen Dimethylsulfat quaterniert, danach hydriert und aufgearbeitet. Man erhält die Verbindung der Formel

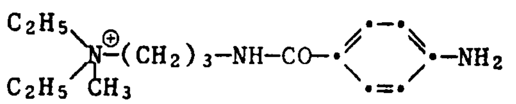 $CH_3SO_4^{\ominus}$

Von dieser Verbindung setzt man 8,3 Teile ein und arbeitet wie im Beispiel 1B) beschrieben. Man erhält den Farbstoff der Formel

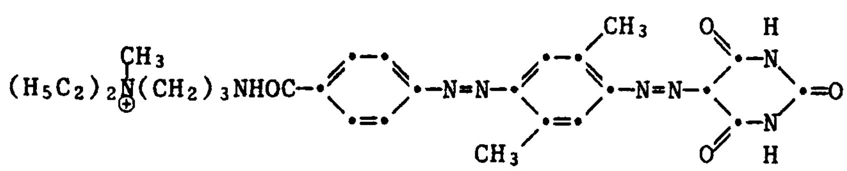 $Cl^{\ominus}/CH_3OSO_3^{\ominus}$

der in Form eines Pulvers anfällt, das in verdünnter Ameisensäure löslich ist und Papier in gelborangen Tönen farbt. Die Papierfärbungen zeigen gute Licht- und Nassechtheiten.

Beispiel 4: 49,6 Teile 5-Nitroisophthalsäuredichlorid werden in 180 Teilen Toluol gelöst und zu der Lösung von 42,9 Teilen Dimethylaminopropylamin in 80 Teilen Toluol getropft, wobei die Temperatur auf 70° ansteigt. Nach dem Zutropfen erhöht man die Innentemperatur auf 100° und hält diese während 6 Stunden. Nach Abkühlen auf Raumtemperatur wird das Lösungsmittel abdekantiert, der Rückstand in 100 Teilen Wasser gelöst und mit Natronlauge auf pH 12 gestellt. Er wird in Essigsäureethylester aufgenommen mit Salzlösung gewaschen und eingedampft. Das erhaltene gelbe Oel wird in 90 Teilen Wasser gelöst, dann werden bei 20 - 25° 44,8 Teile Dimethylsulfat in ca. 45 Min. zugetropft, wobei gleichzeitig durch Zudosieren von 4n Natronlauge ein pH von 10 - 11 eingehalten wird. Man rührt 4 Stunden bei diesem pH-Wert nach. Die vorliegende Lösung wird mit 325 Teilen Ethanol und 260 Teilen Wasser verdünnt und über Palladiumkohle hydriert. Nach Beendigung der Redaktion wird der Katalysator abgesaugt und die Lösung im Vakuum eingedampft. Man erhält die Verbindung der Formel

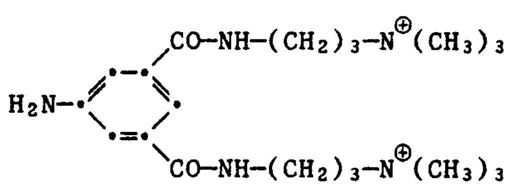 $2\ CH_3SO_4^{\ominus}$

10,8 Teile dieser Verbindung löst man in 45 Teilen Wasser und arbeitet anschliessend wie im Beispiel 1B) beschrieben. Man erhält den Farbstoff der Formel

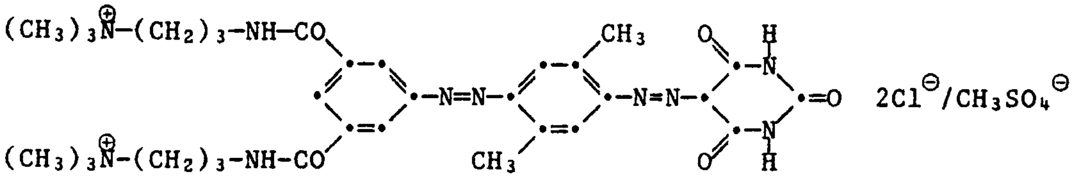

der in Form eines Pulvers anfällt, das in Wasser oder verdünnten Säuren löslich ist und Papier in gelborangen Tönen färbt. Die Papierfärbungen zeigen gute Licht- und Nassechtheiten.

Beispiel 5 - 12

Verwendet man bei ansonsten gleichem Vorgehen wie im Beispiel 1 beschrieben äquivalente Mengen der in Spalte 2 der folgenden Tabelle aufgeführten Anilinderivate und der in Spalte 3 aufgeführten Kupplungskomponenten, so erhält man Farbstoffe der Formel

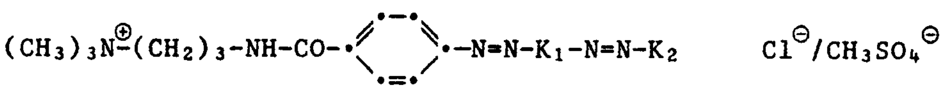

welcher Papier in den in Spalte 4 angegebenen Nuancen mit guten Echtheiten färben.

| Nr. | $K_1$ | $K_2$ | Nuance auf Papier |
|---|---|---|---|
| 5 | 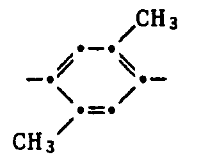 | 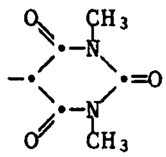 | goldgelb |
| 6 | 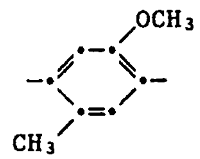 | 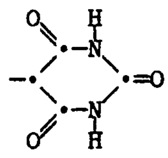 | orange |
| 7 | 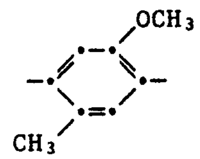 | 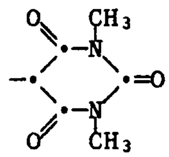 | orange |
| 8 | 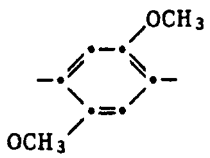 | 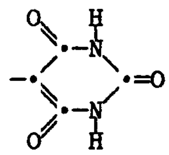 | rot |
| 9 | 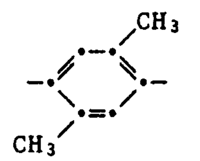 | 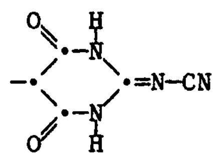 | goldgelb |
| 10 | 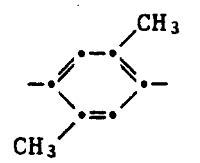 | 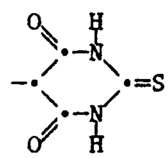 | orange |
| 11 | 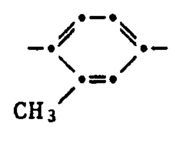 | 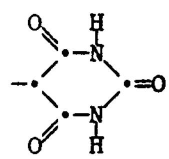 | gelb |
| 12 | 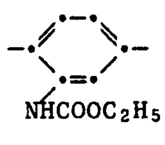 | 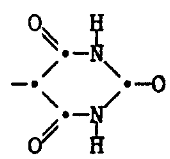 | goldgelb |

Beispiele 13 - 19

Verwendet man bei ansonsten gleichem Vorgehen wie im Beispiel 4 beschrieben äquivalente Mengen der in Spalte 2 der folgenden Tabelle aufgeführten Anilinderivate und der in Spalte 3 aufgeführten Kupplungskomponenten, so erhält man Farbstoffe der Formel

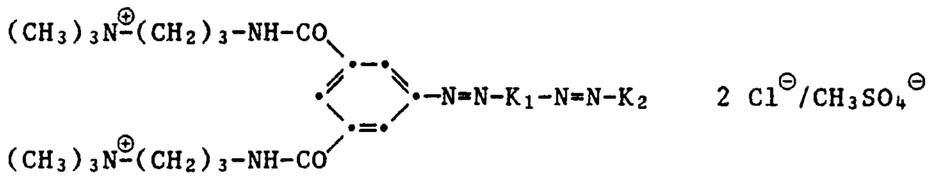

welche Papier in den in Spalte 4 angegebenen Nuancen mit guten Echtheiten färben.

| Nr. | $K_1$ | $K_2$ | Nuance auf Papier |
|---|---|---|---|
| 13 | 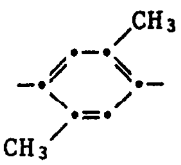 | 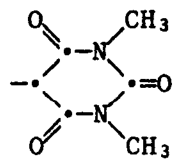 | gelb |
| 14 | 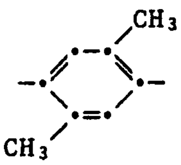 | 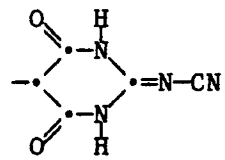 | orange |
| 15 | 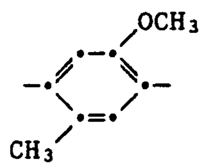 | 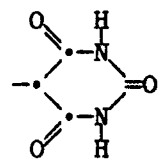 | orange |
| 16 | 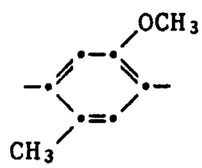 | 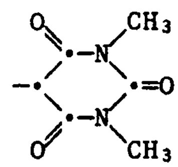 | orange |
| 17 | 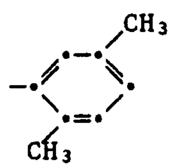 | 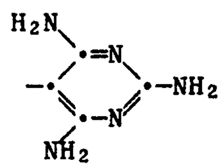 | orange |
| 18 | 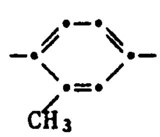 | 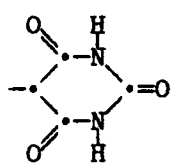 | gelb |
| 19 | 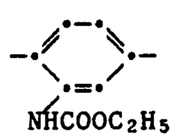 | 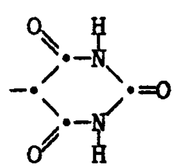 | gelb |

Beispiele 20 - 23

Verwendet man bei ansonsten gleichem Vorgehen wie im Beispiel 3 beschrieben äquivalente Mengen in der Spalte 2 der folgenden Tabelle aufgeführten Anilinderivate und der in Spalte 3 aufgeführten Kupplungskomponenten, so erhält man Farbstoffe der Formel

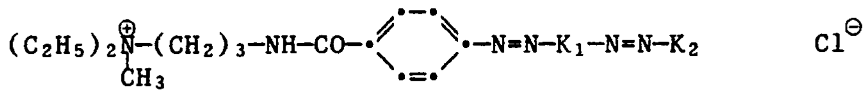

welche Papier in den in Spalte 4 angegebenen Nuancen mit guten Echtheiten färben.

| Nr. | $K_1$ | $K_2$ | Nuance auf Papier |
|---|---|---|---|
| 20 | 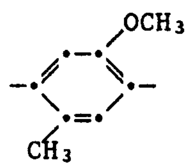 | 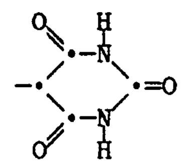 | orange |
| 21 | 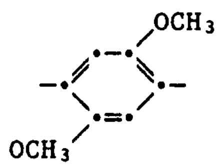 | 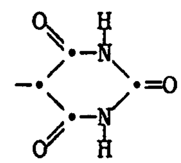 | rot |
| 22 | 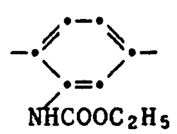 | 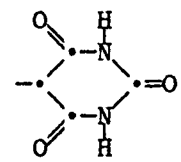 | rot |
| 23 | 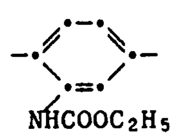 | 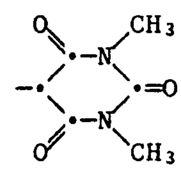 | rot |

<u>Beispiel 24</u>: Man vermischt 50 T chemisch gebleichte Buche Sulfit mit 50 T gebleichtem RKN 15 (Mahlgrad 22° SR) und 2 T des Farbstoffes gemäss Beispiel 1 in Wasser (pH 6, Wasserhärts 10° dH, Temperatur 20°, Flottenverhältnis 1:40). Nach 15 minütigem Rühren werden Papierblätter auf einem Frank-Blattbildner hergestellt.

Das Papier ist in einer sehr intensiven Goldgelbnuance gefärbt. Das Abwasser ist völlig farblos. Der Ausziehgrad erreicht praktisch 100 %. Die Licht- und Nassechtheiten sind ausgezeichnet.

<u>Beispiel 25</u>: Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffe gemäss Beispiel 1 unter starker Turbulenz dem Dünnstoff kontinuierlich zudosiert (0,5 %ige Färbung, Flottenverhältnis 1:400, Wasserhärts 10° dH, pH 6, Temperatur 20°).

Es entsteht auf der Papierbahn eine farbstarke Orangenuance von mittlerer Intensität. Das Abwasser ist völlig farblos.

<u>Beispiel 26</u>: 10 T Baumwollgewebe (gebleichte mercerisierte Baumwolle) werden in einem Labor-Baumfärbeapparat in 200 T einer Flotte (Wasserhärte 10° dH, pH 4, 3 Umwälzungen der Färbeflotte pro Minute) die 0,05 T des Farbstoffes gemäss Beispiel 1 enthält, gefärbt. Die Temperatur wird in 60 Minuten von 20° auf 100° erhöht, dann während 15 Minuten konstant gehalten.

Die Färbeflotte ist völlig ausgezogen. Es entsteht auf dem Baumwollgewebe eine farbstarke orange Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke gelb-orange Färbung, die eine gute Lichtechtheit und sehr gute Nassechtheit besitzt.

## Patentansprüche

1. Kationische, von Sulfonsäuregruppen freie Disazofarbstoffe der Formel

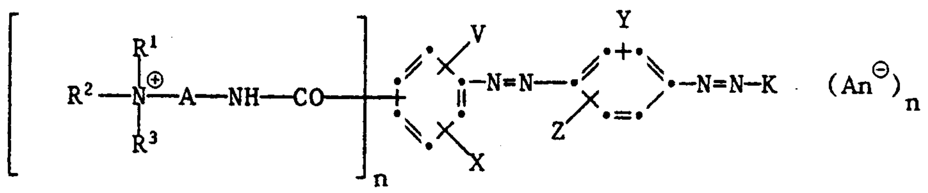

(I)

worin

| | |
|---|---|
| $R^1$, $R^2$ und $R^3$ | unabhängig voneinander je einen gegebenenfalls substituierten Alkylrest oder $R^1$ und $R^2$ zusammen mit dem sie verbindenden Stickstoffatom oder $R^1$, $R^2$ und $R^3$ zusammen mit dem sie verbindenden Stickstoffatom einen heterocyclischen Rest, |
| A | einen Alkylenrest mit 2 bis 6 C-Atomen, |
| V und X | unabhängig voneinander Wasserstoff, gegebenenfalls durch Hydroxy, Halogen, Cyan oder $C_1$-$C_4$-Alkoxy substituiertes $C_1$-$C_4$-Alkyl oder $C_1$-$C_4$-Alkoxy, |
| Y | Wasserstoff, $C_1$-$C_4$-Alkyl oder -Alkoxy, Halogen, Cyan, |
| Z | Wasserstoff, $C_1$-$C_4$-Alkyl oder -Alkoxy, Halogen, Cyan, eine Gruppe der Formel -NH-CHO, -NH-CO-$NH_2$, -NH-CO-NH-Q oder |

$$-NH-CO-(O)_m-Q,$$

worin m Null oder 1 und Q gegebenenfalls substituiertes $C_1$-$C_4$-Alkyl oder Phenyl bedeutet,

K eine Kupplungskomponente der Formel

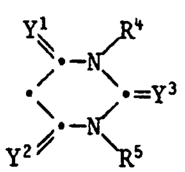

(II)

worin

| | |
|---|---|
| $Y^1$ und $Y^2$ | unabhängig voneinander =O, =NH oder =N-$C_1$-$C_4$-Alkyl, |
| $Y^3$ | =O, =S, =NR oder =N-CN, wobei R Wasserstoff oder $C_1$-$C_4$-Alkyl ist, |
| $R^4$ und $R^5$ | unabhängig voneinander je Wasserstoff, gegebenenfalls substituiertes Alkyl oder gegebenenfalls substituiertes Phenyl bedeuten, |
| n | 1 oder 2 und |
| $An^{\ominus}$ | ein Anion darstellt. |

2. Disazofarbstoffe gemäss Anspruch 1, worin $R^1$, $R^2$ und $R^3$ unabhängig voneinander je Methyl, Ethyl, n- oder iso-Propyl, n-, sec- oder tert-Butyl, geradkettiges oder verzweigtes Pentyl oder Hexyl, Cyclopentyl oder Cyclohexyl darstellen, wobei diese Reste substituiert sein können, z.B. durch Hydroxy, Phenyl oder Alkoxy, oder worin $R^1$ und $R^2$ zusammen mit dem sie verbindenden Stickstoffatom einen Pyrrolidin-, Piperidin-, Morpholin- oder Piperazinrest, oder worin $R^1$, $R^2$ und $R^3$ zusammen mit dem sie verbindenden Stickstoffatom einen Pyridinium- oder monoquaternierten Triethylendiaminrest bilden.

3. Disazofarbstoffe gemäss Anspruch 2, worin $R_1$ Methyl oder Hydroxyethyl und $R^2$ und $R^3$ unabhängig voneinander je $C_1$-$C_3$-Alkyl, insbesondere je Methyl bedeuten.

4. Disazofarbstoffe gemäss einem der Ansprüche 1 - 3, worin V Wasserstoff bedeutet.

5. Disazofarbstoffe gemäss einem der Ansprüche 1 - 4, worin X Wasserstoff, Methyl oder Methoxy bedeutet.

6. Disazofarbstoffe gemäss einem der Ansprüche 1 - 5, worin Y Wasserstoff, Methyl, Methoxy oder Chlor bedeutet.

7. Disazofarbstoffe gemäss einem der Ansprüche 1 - 6, worin Z Methyl, Ethyl, Methoxy, Ethoxy, Acetylamino, Propionylamino, Methoxycarbonylamino, Ethoxycarbonylamino eine Gruppe der Formel -NH-CHO, $-NH-CO-NH_2$,

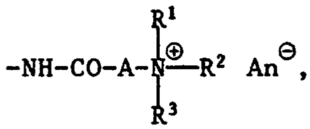

$-NH-CO-R^2$ oder

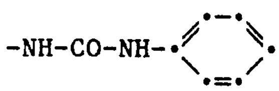

bedeutet, worin A Ethylen, Propylen oder Butylen, $R^1$ Methyl oder Hydroxyethyl und $R^2$ und $R^3$ unabhängig voneinander je $C_1$-$C_3$-Alkyl bedeuten.

8. Disazofarbstoffe gemäss einem der Ansprüche 1 - 7, worin $R^4$ und $R^5$ unabhängig voneinander je ein Methyl-, Ethyl-, n- oder iso-Propyl-, n-, sec.- oder tert.-Butyl-, ein geradkettiger oder verzweigter Pentyl- oder Hexyl- oder ein Cyclohexylrest ist, der durch -OH, $C_1$-$C_4$-Alkoxy oder $C_1$-$C_4$-Hydroxyalkoxy substituiert sein kann, oder ein Phenylrest, der durch $C_1$-$C_4$-Alkyl oder -Alkoxy, Chlor, Brom oder Nitro substituiert sein kann.

9. Disazofarbstoffe gemäss Anspruch 8, worin $R^4$ und $R^5$ unabhängig voneinander je Wasserstoff oder $C_1$-$C_4$-Alkyl bedeuten.

10. Disazofarbstoffe gemäss einem der Ansprüche 1 - 9, worin $Y^1$ und $Y^2$ unabhängig voneinander je =O oder =NH bedeuten.

11. Disazofarbstoffe gemäss Anspruch 10, worin $Y^1$ und $Y_2$ gleich sind.

12. Disazofarbstoffe gemäss Anspruch 11, worin $Y^1$ und $Y^2$ je =O sind.

13. Disazofarbstoffe gemäss einem der Ansprüche 1 - 12, worin $Y^3$ =O, =S, =NH oder =N-CN, insbesondere =O bedeutet.

14. Disazofarbstoffe gemäss Anspruch 1, worin $R^1$ Methyl oder Hydroxyethyl,

| | |
|---|---|
| $R^2$ und $R^3$ | unabhängig voneinander je $C_1$-$C_3$-Alkyl, |
| A | Ethylen, Propylen oder Butylen, |
| V | Wasserstoff, |
| X | Wasserstoff, Methyl oder Methoxy, |
| Y | Wasserstoff, Methyl, Methoxy oder Chlor, |
| Z | Methyl, Methoxy, Ethyl, Ethoxy, Acetylamino, Propionylamino, Methoxycarbonylamino, Ethoxycarbonylamino oder eine Gruppe der Formel<br>-NH-CHO,<br>$-NH-CO-NH_2$, |

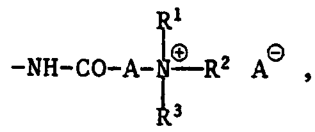

-NH-CO-$R^2$ oder

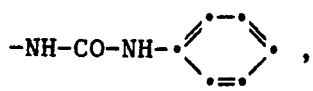

K eine Kupplungskomponente der Formel

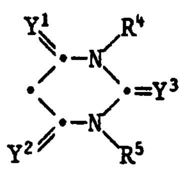

(II)

worin

| | |
|---|---|
| $Y^1$ und $Y^2$ | unabhängig voneinander je =O oder =NH, |
| $Y^3$ | =O, =S, =NH oder =N-CN, |
| $R^4$ und $R^5$ | unabhängig voneinander Wasserstoff oder $C_1$-$C_4$-Alkyl bedeuten, |
| n | 1 oder 2 und |
| $An^{\ominus}$ | ein Anion bedeutet. |

**15.** Disazofarbstoffe gemäss Anspruch 14, worin $R^1$, $R^2$ und $R^3$ je Methyl, A Propylen, V und X je Wasserstoff, $Y^3$ = O, $R^4$ und $R^5$ je Wasserstoff oder Methyl bedeuten und die übrigen Symbole die im Anspruch 14 aufgeführten Bedeutungen aufweisen.

**16.** Verfahren zur Herstellung der Disazofarbstoffe der Formel (I) gemäss Anspruch 1, dadurch gekennzeichnet, dass man ein Amin der Formel

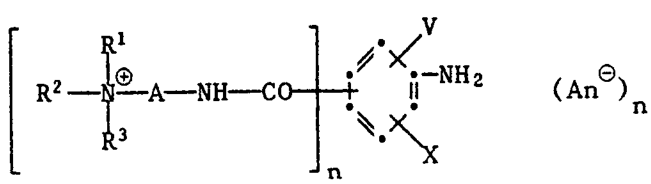

(III)

diazotiert, mit einer Kupplungskomponente der Formel

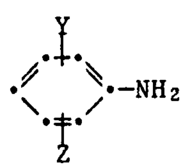

(IV)

umsetzt, die erhaltene Aminoazoverbindung erneut diazotiert und mit einer Kupplungskomponente der Formel

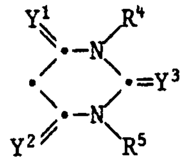

(II)

umsetzt, wobei für $R^1$, $R^2$, $R^3$, A, V, X, Y, Z, $Y^1$, $Y^2$, $Y^3$, $R^4$, $R^5$, n und $An^{\ominus}$ die im Anspruch 1 angegebenen Bedeutungen gelten.

**17.** Verwendung der Azoverbindungen der Formel (I) gemäss Anspruch 1 zum Färben und Bedrucken von Textilmaterialien, Papier, Leder und zur Bereitung von Tinten.

**18.** Verwendung der Azoverbindungen der Formel (I) gemäss Anspruch 1 zum Färben und Bedrucken von natürlichen und regenerierten Cellulosematerialien, vor allem Baumwolle und Viscose.

**19.** Verwendung der Azoverbindungen der Formel (I) gemäss Anspruch 1 zum Färben und Bedrucken von Papier aller Arten, insbesondere zum Färben und Bedrucken von gebleichtem, ungeleimtem, ligninfreiem Papier.

**20.** Verwendung der Azoverbindungen der Formel (I) gemäss Anspruch 1 zum Färben und Bedrucken von Polyacrylnitrilmaterialien.

**21.** Die mit den Azoverbindungen der Formel I gemäss Anspruch 1 behandelten bzw. gefärbten und bedruckten Materialien.

## Claims

**1.** A cationic disazo dye free of sulfonic acid groups, of formula

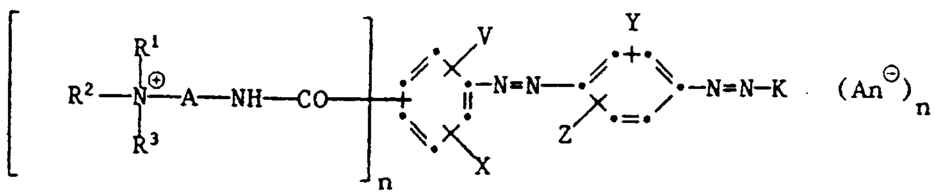

(I)

wherein

| | |
|---|---|
| R', $R^2$ and $R^3$ | are each independently of the other an unsubstituted or substituted alkyl radical or R' and $R^2$, together with the linking nitrogen atom, or $R^1$, $R^2$ and $R^3$, together with the linking nitrogen atom, are a heterocyclic radical, |
| A | is an alkylene radical having 2 to 6 carbon atoms, |
| V and X | are each independently of the other hydrogen or $C_1$-$C_4$alkyl or $C_1$-$C_4$alkoxy, each unsubstituted or substituted by hydroxyl, halogen, cyano or $C_1$-$C_4$alkoxy, |
| Y | is hydrogen, $C_1$-$C_4$alkyl or $C_1$-$C_4$alkoxy, halogen or cyano, |
| Z | is hydrogen, $C_1$-$C_4$alkyl or $C_1$-$C_4$alkoxy, halogen, cyano, or a group of formula<br>-NH-CHO,<br>-NH-CO-$NH_2$,<br>-NH-CO-NH-Q or<br>-NH-CO(O)$_m$-Q,<br>wherein m is zero or 1 and Q is unsubstituted or substituted $C_1$-$C_4$alkyl or phenyl, |
| K | is a coupling component of formula |

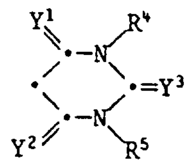

(II)

wherein

| | |
|---|---|
| $Y^1$ and $Y^2$ | are each independently of the other =O, =NH or $=N-C_1-C_4alkyl$, |
| $Y^3$ | is =O, =S, =NR or =N-CN, where R is hydrogen or $C_1-C_4alkyl$, |
| $R^4$ and $R^5$ | are each independently of the other hydrogen, unsubstituted or substituted alkyl or unsubstituted or substituted phenyl, |
| n | is 1 or 2, and |
| $An^{\ominus}$ | is an anion. |

**2.** A disazo dye according to claim 1, wherein $R^1$, $R^2$ and $R^3$ are each independently of the other methyl, ethyl, n-propyl or isopropyl, n-butyl, sec-butyl or tert-butyl, straight-chain or branched pentyl or hexyl, cyclopentyl or cyclohexyl, which radicals may be substituted, e.g. by hydroxyl, phenyl or alkoxy, or wherein $R^1$ and $R^2$, together with the linking nitrogen atom, form a pyrrolidine, piperidine, morpholine or piperazine radical, or wherein $R^1$, $R^2$ and $R^3$, together with the linking nitrogen atom, form a pyridinium or monoquaternised triethylenediamine radical.

**3.** A disazo dye according to claim 2, wherein $R^1$ is methyl or hydroxyethyl, and $R^2$ and $R^3$ are each independently of the other $C_1-C_3alkyl$ and are in particular each methyl.

**4.** A disazo dye according to any one of claims 1 to 3, wherein V is hydrogen.

**5.** A disazo dye according to any one of claims 1 to 4, wherein X is hydrogen, methyl or methoxy.

**6.** A disazo dye according to any one of claims 1 to 5, wherein Y is hydrogen, methyl, methoxy or chlorine.

**7.** A disazo dye according to any one of claims 1 to 6, wherein Z is methyl, ethyl, methoxy, ethoxy, acetylamino, propionylamino, methoxycarbonylamino, ethoxycarbonylamino or a group of formula -NH-CHO, $-NH-CO-NH_2$,

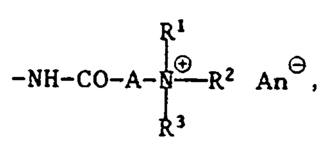

$-NH-CO-R^2$ or

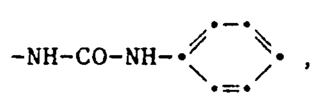

wherein A is ethylene, propylene or butylene, $R^1$ is methyl or hydroxyethyl, and $R^2$ and $R^3$ are each independently of the other $C_1-C_3alkyl$.

**8.** A disazo dye according to any one of claims 1 to 7, wherein $R^4$ and $R^5$ are each independently of the other a methyl, ethyl, n-propyl or isopropyl, n-butyl, sec-butyl or tert-butyl radical, or a straight-chain or branched pentyl or hexyl radical or a cyclohexyl radical, which radicals may be substituted by -OH, $C_1-C_4alkoxy$ or $C_1-C_4hydroxyalkoxy$, or are a phenyl radical which may be substituted by $C_1-C_4alkyl$ or $C_1-C_4alkoxy$, chlorine, bromine or nitro.

**9.** A disazo dye according to claim 8, wherein $R^4$ and $R^5$ are each independently of the other hydrogen or $C_1$-$C_4$alkyl.

**10.** A disazo dye according to any one of claims 1 to 9, wherein $Y^1$ and $Y^2$ are each independently of the other =O or =NH.

**11.** A disazo dye according to claim 10, wherein $Y^1$ and $Y^2$ are identical.

**12.** A disazo dye according to claim 11, wherein $Y^1$ and $Y^2$ are each =O.

**13.** A disazo dye according to any one of claims 1 to 12, wherein $Y^3$ is =O, =S, =NH or =NH-CN, in particular =O.

**14.** A disazo dye according to claim 1, wherein $R^1$ is methyl or hydroxyethyl,

| | |
|---|---|
| $R^2$ and $R^3$ | are each independently of the other $C_1$-$C_3$alkyl, |
| A | is ethylene, propylene or butylene, |
| V | is hydrogen, |
| X | is hydrogen, methyl or methoxy, |
| Y | is hydrogen, methyl, methoxy or chlorine, |
| Z | is methyl, methoxy, ethyl, ethoxy, acetylamino, propionylamino, methoxycarbonylamino, ethoxycarbonylamino or a group of formula |

-NH-CHO,

-NH-CO-$NH_2$,

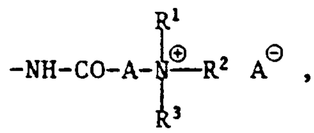

-NH-CO-$R^2$ or

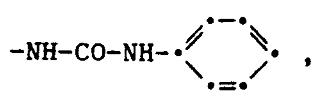

K is a coupling component of formula

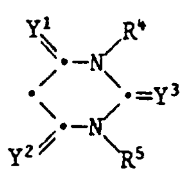

(II)

wherein

| | |
|---|---|
| $Y^1$ and $Y^2$ | are each independently of the other =O or =NH, |
| $Y^3$ | is =O, =S, =NH or =N-CN, |
| $R^4$ and $R^5$ | are each independently of the other hydrogen or $C_1$-$C_4$alkyl, |
| n | is 1 or 2, and |
| $An^{\ominus}$ | is an anion. |

**15.** A disazo dye according to claim 14, wherein $R^1$, $R^2$ and $R^3$ are each methyl, A is propylene, V and X are each hydrogen, $Y^3$ is =O, $R^4$ and $R^5$ are each hydrogen or methyl, and the other symbols are as defined in claim 14.

**16.** A process for the preparation of a disazo dye of formula (I) according to claim 1, which comprises diazotising an amine of formula

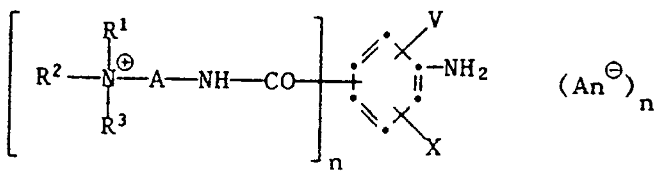

(III)

then reacting the product with a coupling component of formula

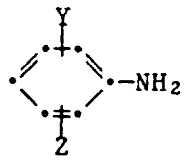

(IV)

diazotising again the aminoazo compound obtained and reacting the product with a coupling component of formula

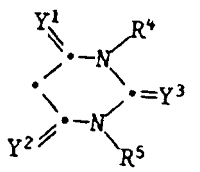

(II)

in which $R^1$, $R^2$, $R^3$, A, V, X, Y, Z, $Y^1$, $Y^2$, $Y^3$, $R^4$, $R^5$, n and $An^{\ominus}$ are as defined in claim 1.

**17.** The use of an azo compound of formula (I) according to claim 1 for dyeing and printing textile materials, paper, leather and for preparing inks.

**18.** The use of an azo compound of formula (I) according to claim 1 for dyeing and printing natural and regenerated cellulosic materials, especially cotton and viscose.

**19.** The use of an azo compound of formula (I) according to claim 1 for dyeing and printing paper of all kinds, especially for dyeing and printing bleached, unsized, lignin-free paper.

**20.** The use of an azo compound of formula (I) according to claim 1 for dyeing and printing polyacrylonitrile materials.

**21.** A material treated and/or dyed or printed with an azo compound of formula I according to claim 1.

**Revendications**

**1.** Colorants bisazoïques cationiques, ne contenant pas de groupe acide sulfonique, de formule :

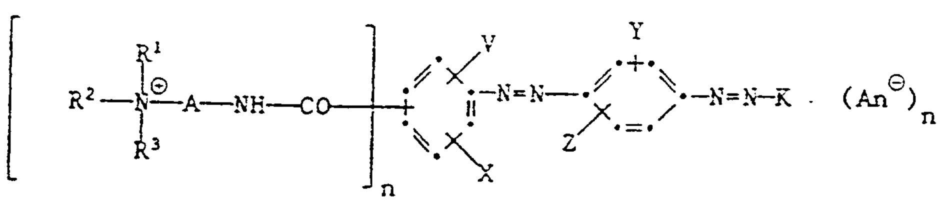

(I)

dans laquelle :

| | |
|---|---|
| $R^1$, $R^2$ et $R^3$ | représentent chacun, indépendamment l'un de l'autre, un groupe alkyle éventuellement substitué, ou bien $R^1$ et $R^2$, conjointement avec l'atome d'azote qui les relie, ou $R^1$, $R^2$ et $R^3$, conjointement avec l'atome d'azote qui les relie, forment un groupe hétérocyclique, |
| A | représente un groupe alkylène comportant de 2 à 6 atomes de carbone, |
| V et X | indépendamment l'un de l'autre, représentent un atome d'hydrogène ou un groupe alkyle en $C_{1-4}$ ou alcoxy en $C_{1-4}$, portant éventuellement des substituants hydroxy, halogéno, cyano ou alcoxy en $C_{1-4}$, |
| Y | représente un atome d'hydrogène ou d'halogène ou un groupe alkyle ou alcoxy en $C_{1-4}$ ou cyano, |
| Z | représente un atome d'hydrogène ou d'halogène ou un groupe alkyle ou alcoxy en $C_{1-4}$ ou cyano ou un groupe de formule -NH-CHO, -NH-CO-$NH_2$, -NH-CO-NH-Q ou -NH-CO-$(O)_m$-Q, où m vaut 0 ou 1 et Q représente un groupe alkyle en $C_{1-4}$ ou phényle éventuellement substitué, |
| K | représente un copulant de formule : |

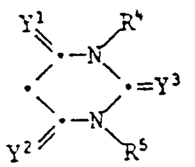

(II)

dans laquelle :

| | |
|---|---|
| $Y^1$ et $Y^2$ | indépendamment l'un de l'autre, représentent =0, =NH ou =N-alkyle en $C_{1-4}$, |
| $Y^3$ | représente =O, =S, =NR ou =N-CN, R représentant un atome d'hydrogène ou un groupe alkyle en $C_{1-4}$, |
| $R^4$ et $R^5$ | indépendamment l'un de l'autre, représentent chacun un atome d'hydrogène, un groupe alkyle éventuellement substitué ou un groupe phényle éventuellement substitué, |
| n | vaut 1 ou 2, et |
| $An^{\ominus}$ | représente un anion. |

**2.** Colorants bisazoïques conformes à la revendication 1, dans lesquels $R^1$, $R^2$ et $R^3$ représentent chacun, indépendamment l'un de l'autre, un groupe méthyle, éthyle, n- ou i-propyle, n-, s- ou t-butyle, pentyle ou hexyle à chaîne droite ou ramifiée, cyclopentyle ou cyclohexyle, ces groupes pouvant être substitués, par exemple par hydroxy, phényle ou alcoxy, ou dans lesquels $R^1$ et $R^2$, conjointement avec l'atome d'azote qui les relie, forment un reste de pyrrolidine, de pipéridine, de morpholine ou de pipérazine, ou dans lesquels $R^1$, $R^2$ et $R^3$, conjointement avec l'atome d'azote qui les relie, forment un reste pyridinium ou un reste de triéthylène-diamine monoquaternisée.

**3.** Colorants bisazoïques conformes à la revendication 2, dans lesquels $R^1$ représente un groupe méthyle ou hydroxyéthyle et $R^2$ et $R^3$, indépendamment l'un de l'autre, représentent chacun un groupe alkyle en $C_{1-3}$, et en particulier chacun un groupe méthyle.

**4.** Colorants bisazoïques conformes à l'une des revendications 1 à 3, dans lesquels V représente un atome d'hydrogène.

**5.** Colorants bisazoïques conformes à l'une des revendications 1 à 4, dans lesquels X représente un atome d'hydrogène, un groupe méthyle ou un groupe méthoxy.

**6.** Colorants bisazoïques conformes à l'une des revendications 1 à 5, dans lesquels Y représente un atome d'hydrogène ou de chlore ou un groupe méthyle ou méthoxy.

**7.** Colorants bisazoïques conformes à l'une des revendications 1 à 6, dans lesquels Z représente un groupe méthyle, éthyle, méthoxy, éthoxy, acétylamino, propionylamino, méthoxycarbonylamino ou éthoxycarbonylamino, ou encore un groupe de formule :
-NH-CHO, -NH-CO-$NH_2$,

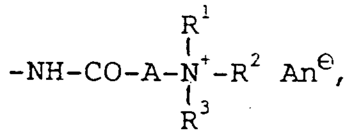

-NH-CO-$R^2$ ou

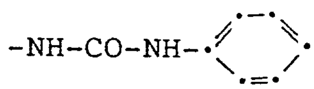

où :

| | |
|---|---|
| A | représente un groupe éthylène, propylène ou butylène, |
| $R^1$ | représente un groupe méthyle ou hydroxyéthyle, et |
| $R^2$ et $R^3$ | indépendamment l'un de l'autre, représentent chacun un groupe alkyle en $C_{1-3}$. |

8. Colorants bisazoïques conformes à l'une des revendications 1 à 7, dans lesquels $R^4$ et $R^5$, indépendamment l'un de l'autre, représentent chacun un groupe méthyle, éthyle, n- ou i-propyle, n-, s- ou t-butyle, pentyle ou hexyle à chaîne droite ou ramifiée, ou cyclohexyle, qui peut porter des substituants hydroxy, alcoxy en $C_{1-4}$ ou hydroxyalcoxy en $C_{1-4}$, ou encore un groupe phényle qui peut porter des substituants alkyle ou alcoxy en $C_{1-4}$, chloro, bromo ou nitro.

9. Colorants bisazoïques conformes à la revendication 8, dans lesquels $R^4$ et $R^5$ représentent chacun, indépendamment l'un de l'autre, un atome d'hydrogène ou un groupe alkyle en $C_{1-4}$.

10. Colorants bisazoïques conformes à l'une des revendications 1 à 9, dans lesquels $Y^1$ et $Y^2$ représentent chacun, indépendamment l'un de l'autre, =O ou =NH.

11. Colorants bisazoïques conformes à la revendication 10, dans lesquels $Y^1$ et $Y^2$ sont identiques.

12. Colorants bisazoïques conformes à la revendication 11, dans lesquels $Y^1$ et $Y^2$ représentent chacun =O.

13. Colorants bisazoïques conformes à l'une des revendications 1 à 12, dans lesquels $Y^3$ représente =O, =S, =NH ou =N-CN, et en particulier =O.

14. Colorants bisazoïques conformes à la revendication 1, dans lesquels :

| | |
|---|---|
| $R^1$ | représente un groupe méthyle ou hydroxyéthyle, |
| $R^2$ et $R^3$ | représentent chacun, indépendamment l'un de l'autre, un groupe alkyle en $C_{1-3}$, |
| A | représente un groupe éthylène, propylène ou butylène, |
| V | représente un atome d'hydrogène, |
| X | représente un atome d'hydrogène ou un groupe méthyle ou méthoxy, |
| Y | représente un atome d'hydrogène ou de chlore ou un groupe méthyle ou méthoxy, |
| Z | représente un groupe méthyle, méthoxy, éthyle, éthoxy, acétylamino, propionylamino, méthoxycarbonylamino ou éthoxycarbonylamino, ou un groupe de formule : -NH-CHO, -NH-CO-$NH_2$, |

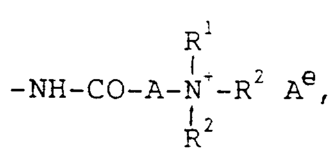

-NH-CO-$R^2$, ou

-NH-CO-NH-, 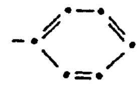 ,

K représente un copulant de formule

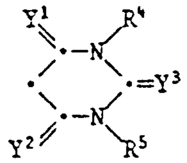

dans laquelle :

$Y^1$ et $Y^2$ indépendamment l'un de l'autre, représentent chacun =O ou =NH,

$Y^3$ représente =O, =S, =NH ou =N-CN, et

$R^4$ et $R^5$ indépendamment l'un de l'autre, représentent un atome d'hydrogène ou un groupe alkyle en $C_{1-4}$,

n vaut 1 ou 2, et

$An^{\ominus}$ représente un anion.

**15.** Colorants bisazoïques conformes à la revendication 14, dans lesquels :

$R^1$, $R^2$ et $R^3$ représentent chacun un groupe méthyle,

A représente un groupe propylène,

V et X représentent chacun un atome d'hydrogène,

$Y^3$ représente =O,

$R^4$ et $R^5$ représentent chacun un atome d'hydrogène ou un groupe méthyle,

et les autres symboles ont les significations indiquées dans la revendication 14.

**16.** Procédé de préparation de colorants bisazoïques de formule (I) conformes à la revendication 1, caractérisé en ce que l'on diazote une amine de formule :

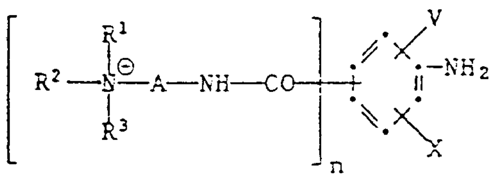 $(An^{\ominus})_n$ (III)

on fait réagir le produit avec un copulant de formule :

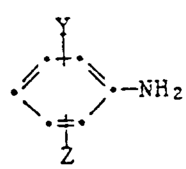 (IV)

on diazote à nouveau le composé aminoazoïque obtenu et on fait réagir le produit avec un copulant de formule :

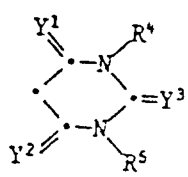 (II)

les symboles $R^1$, $R^2$, $R^3$, A, V, X, Y, Z, $Y^1$, $Y^2$, $Y^3$, $R^4$, $R^5$, n et $An^{\ominus}$ ayant les significations indiquées dans la revendication 1.

**17.** Utilisation des composés azoïques de formule (I) conformes à la revendication 1, pour la teinture et l'impression de matériaux textiles, de papier ou de cuir, et pour la préparation d'encres.

**18.** Utilisation des composés azoïques de formule (I) conformes à la revendication 1, pour la teinture et l'impression de matériaux cellulosiques naturels ou régénérés, surtout coton et viscose.

**19.** Utilisation des composés azoïques de formule (I) conformes à la revendication 1, pour la teinture et l'impression de papiers de toutes sortes, en particulier pour la teinture et l'impression de papiers blanchis, non encollés, exempts de lignine.

**20.** Utilisation des composés azoïques de formule (I) conformes à la revendication 1, pour la teinture et l'impression de matériaux en polyacrylonitrile.

**21.** Matériaux traités ou teints et imprimés avec les composés azoïques de formule (I) conformes à la revendication 1.